# EUROPEAN PATENT APPLICATION

(11) **EP 4 589 693 A1**
(43) Date of publication of application: **23.07.2025**
(21) Application number: 24781248.0
(22) Date of filing: 28.03.2024
(51) Int. Cl.: H01M 4/62, C01B 32/159, C01B 32/174, H01M 4/38, H01M 4/587, H01M 4/48, H01M 4/139, H01M 10/0525

(54) **PRE-DISPERSED SOLUTION, ELECTRODE COMPOSITION, ELECTRODE SLURRY, ELECTRODE, AND LITHIUM-ION SECONDARY BATTERY**

(30) Priority: 31.03.2023 KR 20230042673
(71) Applicant: LG Energy Solution, Ltd., Seoul 07335 (KR)
(72) Inventor: KO, Minjin, Daejeon 34122 (KR); KIM, Young Jae, Daejeon 34122 (KR); JUN, Chan Soo, Daejeon 34122 (KR); KWON, Yohan, Daejeon 34122 (KR); LEE, Jaewook, Daejeon 34122 (KR)
(74) Representative: Hoffmann Eitle
(86) International application number: PCT/KR2024/003929
(87) International publication number: WO 2024/205258

(57) **Abstract**

The present application relates to a pre-dispersion solution including single-walled carbon nanotubes (SWCNTs), in which with respect to 100 parts by weight of the entire single-walled carbon nanotubes, the content of single-walled carbon nanotubes having a length of more than 0 µm and less than 0.2 µm is more than 0 part by weight and 1 part by weight or less, and the content of single-walled carbon nanotubes having a length of 10 µm or more and less than 100 µm is 15 parts by weight or more, and an electrode composition, an electrode slurry, an electrode, and a lithium ion secondary battery which include the same. Since the dispersibility of the pre-dispersion solutions according to the exemplary embodiments is controlled, the pre-dispersion solution may contribute to the improvement in the phase stability of electrode compositions and/or electrode slurries and the stability, service life, safety, and the like of electrodes and/or lithium ion secondary batteries, in the future.

## Description

### [Technical Field]

The present application relates to a pre-dispersion solution, an electrode composition, an electrode slurry, an electrode, and a lithium ion secondary battery.

This application claims priority to and the benefit of Korean Patent Application No. 10-2023-0042673 filed in the Korean Intellectual Property Office on March 31, 2023, the entire contents of which are incorporated herein by reference.

### [Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

Meanwhile, as technology development of and demand for mobile devices have increased, demands for secondary batteries have been rapidly increased. Accordingly, lithium secondary batteries having characteristics of high energy density and voltage, long cycle life, and low self-discharge rate have been commercialized and widely used. Accordingly, as an electrode for a high-capacity lithium secondary battery, studies have been actively conducted in order to prepare an electrode having a high energy density per unit volume.

Generally, a secondary battery is composed of a positive electrode, a negative electrode, an electrolyte, and a separator, and in particular, the negative electrode includes a negative electrode active material, and silicon-based particles with large charge and discharge capacities may be used as the negative electrode active material.

In particular, recently, in response to the demand for a secondary battery having an electrode with a high energy, studies have been actively conducted on a method for increasing the capacity by together using a silicon-based compound such as Si/C or SiOx (0 < x < 2), which has a 10-fold or higher capacity than a graphite-based material, as a negative electrode active material. However, compared to existing graphite-based materials, silicon-based compounds have a problem in that due to the generation of hydrogen gas in the repeated charging and discharging process, the volume expands to block the conductive path, thereby causing the battery characteristics to deteriorate.

In order to solve the volume expansion caused by the above-described repeated charging and discharging process, studies have also been conducted on the composition of binders, and as a result, studies have been conducted on binder polymers having strong stress. However, these binder polymers alone have limitations in preventing an increase in electrode thickness due to contraction and expansion of a negative electrode active material and a deterioration in the performance of a lithium secondary battery derived therefrom.

In addition, in order to secure the conductivity of the negative electrode, the secondary battery further includes a conductive material. Although carbon black and the like have been mainly used in the related art, single-walled carbon nanotubes (SWCNTs) with a thin and elongated shape have been used in order to improve the capacity of the secondary battery.

However, when single-walled carbon nanotubes are used as a conductive material, the single-walled carbon nanotubes need to be used in the form of a dispersion solution of single-walled carbon nanotubes in order to uniformly arrange the single-walled carbon nanotubes in an active material layer. However, as the degree of dispersion of the dispersion solution increases, the density difference between a conductive material including the dispersion solution and an active material deepens, resulting in a migration in which the conductive material moves from a current collector to an upper layer, so that there is a problem in that the phase stability, conductivity, and the like of an electrode composition deteriorate.

Therefore, in order to control the degree of dispersion of the dispersion solution, various methods have been discussed in terms of a dispersion medium, an active material, and a conductive material, and as one of these methods, a method of controlling dispersion by changing the particle size distribution of single-walled carbon nanotubes, which are conductive materials, has been discussed.

### [Detailed Description of the Invention]

### [Technical Problem]

The present inventors have found that excellent conductive network connectivity between active materials is maintained during charging and discharging of an electrode, and thus, the service life performance of a battery is excellent, and in order to control the dispersion stability and excellent coatability of single-walled carbon nanotubes used as conductive materials, the above problems can be solved by classifying the single-walled carbon nanotubes based on the length and limiting each content.

Further, the present inventors have found that by specifying the content range of a specific compound (that is, acrylamide) in a copolymer constituting a binder as a method to improve the commerciality of the single-walled carbon nanotubes, the above problems can be solved, and furthermore, the phase stability and the volume expansion problems of a negative electrode can be solved.

Accordingly, the present invention has been made in an effort to provide a pre-dispersion solution in which dispersibility is controlled because single-walled carbon nanotubes included in a conductive material have a specific particle size distribution for an electrode composition.

In addition, the present invention has been made in an effort to provide an electrode composition, an electrode slurry, an electrode, and a lithium ion secondary battery, which are capable of simultaneously solving the volume expansion problem of a negative electrode in the future while maintaining the characteristics in which the dispersibility of single-walled carbon nanotubes is controlled using a (meth)acrylamide-containing binder having high compatibility with the pre-dispersion solution.

### [Technical Solution]

An exemplary embodiment of the present specification provides a pre-dispersion solution including single-walled carbon nanotubes (SWCNTs), in which with respect to 100 parts by weight of the entire single-walled carbon nanotubes, the content of single-walled carbon nanotubes having a length of more than 0 µm and less than 0.2 µm is more than 0 part by weight and 1 part by weight or less, and the content of single-walled carbon nanotubes having a length of 10 µm or more and less than 100 µm is 15 parts by weight or more.

In another exemplary embodiment, provided is an electrode composition including: an electrode active material; a conductive material; and a binder, in which the conductive material includes the pre-dispersion solution, and the binder is a copolymer including a (meth)acrylamide (AM)-derived repeating unit.

In still another exemplary embodiment, provided is an electrode slurry including the electrode composition and a solvent.

In yet another exemplary embodiment, provided is an electrode including: a current collector layer; and an electrode active material layer provided on one surface or both surfaces of the current collector layer, in which the electrode active material layer includes the electrode slurry or a dried material thereof.

Finally, an exemplary embodiment of the present specification provides a lithium ion secondary battery including: a first electrode; a second electrode; a separator interposed between the first electrode and the second electrode; and an electrolyte, in which any one of the first electrode and the second electrode is the electrode.

### [Advantageous Effects]

In the pre-dispersion solution according to an exemplary embodiment of the present invention, carbon nanotubes have a particle size distribution with a specific length, and thus have an effect in that dispersibility is controlled.

Specifically, when the content of single-walled carbon nanotubes having a length of more than 0 µm and less than 0.2 µm is 1 part by weight or less with respect to 100 parts by weight of the entire single-walled carbon nanotubes, the damage to single-walled carbon nanotubes due to excessive pre-dispersion can be suppressed and the deterioration in the connection performance of a conductive network can be prevented.

Specifically, as long as the content of single-walled carbon nanotube having a length of 10 µm or more and less than 100 µm satisfies 15 parts by weight or more with respect to 100 parts by weight of the entire single-walled carbon nanotubes, during charging and discharging, the service life can be improved due to the excellent connectivity of the conductive network by the volume expansion of an electrode.

Additionally, when the content of single-walled carbon nanotubes having a length of 0.2 µm or more and less than 10 µm is 30 parts by weight or more and 80 parts by weight or less with respect to 100 parts by weight of the entire single-walled carbon nanotubes, it is advantageous in terms of the viscosity and/or processability of a slurry, and the conductive connectivity of the electrode can be further improved.

Additionally, when the content of single-walled carbon nanotubes having a length of 100 µm or more are 1 part by weight or less with respect to 100 parts by weight of entire single-walled carbon nanotubes, the dispersion stability is improved while having better connectivity of the conductive network due to the volume expansion of an electrode during charging and discharging, so that in the future, it is possible to additionally ensure good coatability in the slurry state, and it can be advantageous in terms of viscosity and/or processability.

The electrode composition according to another exemplary embodiment of the present invention can provide an electrode composition capable of simultaneously solving the volume expansion problem of an electrode in the future while maintaining the effects provided by the pre-dispersion solution.

The classification of the composition of single-walled carbon nanotubes based on length helps maintain the connectivity of the conductive network, compared to the classification of the composition of single-walled carbon nanotubes based on particle diameter, and in particular, the use with an electrode active material containing a silicon-based active material, which has large volume expansion, and thus facilitates an increase in spacing between active materials of charged and discharged batteries due to large porosity, helps the connectivity of the conductive network to be efficiently maintained.

Furthermore, since the electrode slurry, electrode, and lithium ion secondary battery according to an exemplary embodiment of the present invention include the electrode composition, they have the above-described effects, and the service life characteristics can be improved, thereby securing the safety and stability of the lithium ion secondary battery.

### [Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, the fact that a polymer includes a monomer as a monomer unit means that the monomer participates in a polymerization reaction, and thus is included as a repeating unit in the polymer.

In the present specification, when the polymer includes a monomer, it is interpreted to be the same as when the polymer includes a monomer as a monomer unit.
In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material.

In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

### <Pre-dispersion solution>

An exemplary embodiment of the present specification provides a pre-dispersion solution including single-walled carbon nanotubes (SWCNTs), in which with respect to 100 parts by weight of the entire single-walled carbon nanotubes, the content of single-walled carbon nanotubes having a length of more than 0 µm and less than 0.2 µm is more than 0 part by weight and 1 part by weight or less, and the content of single-walled carbon nanotubes having a length of 10 µm or more and less than 100 µm is 15 parts by weight or more.

In the present specification, the pre-dispersion solution may be prepared by adding a dispersant (additionally, a dispersion medium, a viscosity modifier, and the like) to single-walled carbon nanotubes having the composition and content and mixing the resulting mixture, and milling the mixture.

In another exemplary embodiment of the present specification, the pre-dispersion solution may further include a dispersant.

In some cases, the viscosity may be adjusted by adding an additive (that is, a viscosity modifier) such as tannic acid to the pre-dispersion solution.

In the present specification, the pre-dispersion solution is prepared by a method of preparing single-walled carbon nanotubes and then preparing the pre-dispersion solution using a high-pressure homogenizer, and the like.

In the present specification, "100 parts by weight of entire single-walled carbon nanotubes" means being based on a solid, in other words, the solid component of the pre-dispersion solution. The basis of parts by weight based on the solid content and a solid content of each component may be measured by a general analysis means used in the art, such as liquid chromatography or gas chromatography.

In the present specification, for the milling, it is possible to perform a milling method using a ball mill, a bead mill, a disc mill, a basket mill, or a high-pressure homogenizer, and preferably, it is possible to use a high-pressure homogenizer capable of effectively achieving dispersion without causing damage to the single-walled carbon nanotubes.

In the present specification, milling by a high-pressure homogenizer may be performed by pressurizing a mixture using, for example, a plunger pump of the high-pressure homogenizer and pushing the mixture out into the gap of a homogenization valve, with forces such as cavitation, shear, impact, and explosion when the mixture is passed through the gap.

In the present specification, the particle size of single-walled carbon nanotubes (SWCNTs) may be measured by a particle size analyzer (manufactured by Malvern Panalytical Ltd.) using a laser diffraction method. The laser diffraction method generally enables the measurement of a particle size (particularly, a length) over a wide range from submicron to several mm, and may obtain highly reproducible and highly resolvable analysis results.

The pre-dispersion solution according to the exemplary embodiments may control the dispersibility by classifying single-walled carbon nanotubes based on length and specifying the content thereof, and accordingly, may efficiently improve the conductivity.

Another exemplary embodiment of the present specification is that the content of single-walled carbon nanotubes having a length of more than 0 µm and less than 0.2 µm may be 0.05 parts by weight or more, 0.1 parts by weight or more, and 0.2 parts by weight, or may be 0.95 parts by weight or less, 0.90 parts by weight or less, or 0.85 parts by weight or less, with respect to 100 parts by weight of the entire single-walled carbon nanotubes.

When the above content range is satisfied, damage to single-walled carbon nanotubes due to excessive pre-dispersion may be suppressed, and deterioration in connection performance of the conductive network may be prevented.

Still another exemplary embodiment of the present specification is that the content of single-walled carbon nanotubes having a length of 10 µm or more and less than 100 µm may be 16 parts by weight or more, 18 parts by weight or more, 20 parts by weight or more, or may be 25 parts by weight or more, with respect to 100 parts by weight of the entire single-walled carbon nanotubes, and the upper limit thereof is not particularly limited, but may be preferably 80 parts by weight or less.

When the above content range is satisfied, the service life may be improved due to the excellent connectivity of the conductive network caused by the volume expansion of the electrode during charging and discharging.

The pre-dispersion solution according to the exemplary embodiments may include single-walled carbon nanotubes with the above length and content ranges to suppress damage to the single-walled carbon nanotubes caused by excessive pre-dispersion and prevent deterioration in the connection performance of the conductive network, and the service life may be improved due to excellent connectivity of the conductive network caused by the volume expansion of the electrode during charging and discharging.

The pre-dispersion solution according to the exemplary embodiments may improve the performance of an electrode including a silicon-based active material.

In an exemplary embodiment of the present specification, single-walled carbon nanotubes having a length of 100 µm or more are further included, and the content of the single-walled carbon nanotubes having a length of 100 µm or more may be more than 0 parts by weight and 1 part by weight or less with respect to 100 parts by weight of the entire single-walled carbon nanotubes.

The pre-dispersion solution according to the exemplary embodiments further includes the single-walled carbon nanotubes having the above length, and by satisfying the content range, the dispersion stability is improved while having better connectivity of the conductive network due to the volume expansion of an electrode during charging and discharging, so that in the future, it is possible to additionally ensure good coatability in the slurry state, and it can be advantageous in terms of viscosity and/or processability.

In an exemplary embodiment of the present specification, single-walled carbon nanotubes having a length of 0.2 µm or more and less than 10 µm are further included, and the content of the single-walled carbon nanotubes having a length of 0.2 µm or more and less than 10 µm may be 30 parts by weight or more and 80 part by weight or less with respect to 100 parts by weight of the entire single-walled carbon nanotubes.

The pre-dispersion solution according to the exemplary embodiments is advantageous in terms of the viscosity and/or processability of a slurry, and the conductive connectivity of the electrode may be further improved.

According to another exemplary embodiment of the present specification, when the single-walled carbon nanotubes have a length of more than 0 µm and less than 0.2 um, a length of 0.2 µm or more and less than 10 µm, a length of 10 µm or more and less than 100 µm, and a length of 100 µm or more, the content of the single-walled carbon nanotubes having a length of 10 µm or more and less than 100 µm may be 15 parts by weight or more and 60 parts by weight or less, 15 parts by weight or more and 50 parts by weight or less, or 15 parts by weight or more and 46 parts by weight or less, with respect to 100 parts by weight of the entire single-walled carbon nanotubes.

The pre-dispersion solution according to the exemplary embodiments is advantageous in terms of the viscosity and/or processability of a slurry, and the conductive connectivity of the electrode may be further improved.

In an exemplary embodiment of the present specification, the pre-dispersion solution further includes a dispersion medium, and the dispersion medium may be at least one of water and an organic solvent.

In the present specification, examples of the organic solvent used as a dispersion medium include N-methyl-2-pyrrolidone (NMP), N,N-dimethyl acetamide (DMAc), N,N-dimethyl formamide (DMF), alcohol, and the like, but are not limited thereto.

The pre-dispersion solution according to the exemplary embodiments may have improved dispersibility.

According to preferred exemplary embodiments of the present specification, the dispersion medium may be water.

The pre-dispersion solution according to the exemplary embodiments may have improved compatibility with a binder.

In an exemplary embodiment of the present specification, the pre-dispersion solution may further include a dispersant.

In another exemplary embodiment of the present specification, the dispersant may be selected from the group consisting of hydrogenated nitrile butadiene rubber (H-NBR), polyvinylidene fluoride (PVDF), polyvinyl pyrrolidone (PVP), polyvinyl butyral (PVB) and carboxymethyl cellulose (CMC), and may be preferably PVP or CMC, but is not limited thereto.

The pre-dispersion solution according to the exemplary embodiments may further have improved dispersibility.

### <Electrode composition>

An exemplary embodiment of the present specification provides an electrode composition including: an electrode active material; a conductive material; and a binder, in which the conductive material includes the above-described pre-dispersion solution, and the binder is a copolymer including a (meth)acrylamide (AM)-derived repeating unit.

In the present specification, the copolymer is a concept that includes all alternating copolymers, random copolymers, block copolymers, and graft copolymers, unless otherwise specified.

In an exemplary embodiment of the present specification, the electrode active material may include one or more selected from the group consisting of a silicon-based active material and a carbon-based active material.

In an exemplary embodiment of the present specification, the electrode active material may be present in an amount of 30 parts by weight or more, preferably 35 parts by weight or more, more preferably 40 parts by weight or more, and 95 parts by weight or less, preferably 90 parts by weight or less, based on 100 parts by weight of the electrode composition.

In the present specification, the silicon-based active material may be present, for example, in a crystalline or amorphous form. Specifically, the silicon particles of the silicon-based active material may be preferably spherical particles, but are not limited thereto.

In another exemplary embodiment of the present specification, the electrode active material may be a silicon-based active material. In other words, the electrode active material may be composed of a silicon-based active material alone.

In still another exemplary embodiment of the present specification, the electrode active material may include a silicon-based active material and a carbon-based active material.

In yet another exemplary embodiment of the present specification, the electrode active material includes a silicon-based active material as a main component (in a content of more than about 50 parts by weight based on 100 parts by weight of the entire electrode active material), and may include a carbon-based active material as a sub-component (in a content of less than about 50 parts by weight based on 100 parts by weight of the entire electrode active material) .

In still yet another exemplary embodiment of the present specification, the electrode active material includes a carbon-based active material as a main component (in a content of more than about 50 parts by weight based on 100 parts by weight of the entire electrode active material), and may include a silicon-based active material as a sub-component (in a content of less than about 50 parts by weight based on 100 parts by weight of the entire electrode active material) .

In a further exemplary embodiment of the present specification, the electrode active material includes a carbon-based active material as a main component (in a content of about 50 parts by weight based on 100 parts by weight of the entire electrode active material), and may include a silicon-based active material as a sub-component (in a content of about 50 parts by weight based on 100 parts by weight of the entire electrode active material).

In an exemplary embodiment of the present specification, the silicon-based active material may include one or more of SiOx (x=0), SiOx (0<x<2), SiC, and a Si alloy.

In the present specification, the case of SiO₂ where x is 2 in the SiOx is not included, but this SiO₂ does not react with lithium ions, and thus cannot store lithium. Therefore, it is preferred that x falls within the range of the exemplary embodiment.

In the present specification, the silicon-based active material may be Si/C composed of a composite of Si and C, or Si.

In the present specification, two or more of the silicon-based active materials may be used in mixture.

In general, it is known that silicon-based active materials have a 10-fold or higher capacity than that of carbon-based active material, and accordingly, when a silicon-based active material is applied to an electrode, particularly, a negative electrode, it is expected that it is possible to implement an electrode having a high level of energy density even with a small thickness.

In an exemplary embodiment of the present specification, when the electrode active material is composed of a silicon-based active material, the silicon-based active material includes one or more selected from the group consisting of SiOx (x=0) and SiOx (0<x<2), and may include 70 parts by weight or more of the SiOx (x=0) based on 100 parts by weight of the silicon-based active material.

In another exemplary embodiment, the silicon-based active material may include the SiOx (x=0) in an amount of 70 parts by weight or more, preferably 80 parts by weight or more, and more preferably 90 parts by weight or more, or 100 parts by weight or less, preferably 99 parts by weight or less, and more preferably 95 parts by weight or less, based on 100 parts by weight of the silicon-based active material.

In another exemplary embodiment of the present invention, the silicon-based active material may have an average particle diameter (D₅₀) of 3 µm to 10 µm.

When the above particle diameter range is satisfied, the active material during charging and discharging is further ensured to be structurally stable, and it is possible to prevent a problem in that the volume expansion/contraction level also becomes large as the particle diameter is excessively increased, and to further prevent a problem in that the initial efficiency is reduced because the particle diameter is excessively small.

The particle diameter of the negative electrode active material may be adjusted by a method such as a ball mill, a jet mill, or an air current classification, and the method is not limited thereto.

In the present specification, "Dn" means the particle diameter distribution, and means the particle diameter at the n% point of the cumulative distribution of the number of particles according to the particle diameter. That is, D₅₀ is the particle diameter (average particle diameter) at the 50% point of the cumulative distribution of the number of particles according to the particle diameter, D₉₀ is the particle diameter at the 90% point of the cumulative distribution of the number of particles according to the particle diameter, and D₁₀ is the particle diameter at the 10% point of the cumulative distribution of the number of particles according to the particle diameter. Meanwhile, the particle diameter distribution may be measured using a laser diffraction method. Specifically, after a powder to be measured is dispersed in a dispersion medium, a particle diameter distribution is calculated by introducing the resulting dispersion into a commercially available laser diffraction particle diameter measurement device (for example, Microtrac S3500) to measure the difference in diffraction pattern according to the particle size when particles pass through the laser beam.

In the present specification, in some cases, a carbon-based active material may be further included in addition to the above-described silicon-based active material. The carbon-based active material may further contribute to improving the excellent cycle characteristics or battery service life performance of the negative electrode or secondary battery of the present invention.

In an exemplary embodiment of the present specification, the carbon-based active material may include at least one selected from the group consisting of artificial graphite, natural graphite, hard carbon, and soft carbon.

In an exemplary embodiment of the present invention, when the electrode active material includes a silicon-based active material and a carbon-based active material, the weight ratio between the silicon-based active material and the carbon-based active material may be in a range of 2 : 98 to 30 : 70.

The electrode active material according to the exemplary embodiment includes a carbon-based active material as a main component, and thus may further provide an effect in which swelling slightly occurs due to the small volume expansion of the active material during charging and discharging and the conductive connectivity of the electrode is excellent.

In an exemplary embodiment of the present specification, the conductive material may be present in an amount of 0.03 parts by weight or more and 60 parts by weight or less based on 100 parts by weight of the electrode composition.

In another exemplary embodiment of the present specification, the conductive material may be included in an amount of 0.03 parts by weight or more and 60 parts by weight or less, preferably 0.05 parts by weight or more and 59 parts by weight or less, and more preferably 0.5 parts by weight or more and 58 parts by weight or less, based on 100 parts by weight of the electrode composition.

In still another exemplary embodiment of the present specification, the electrode composition refers to a negative electrode composition, and accordingly, the electrode active material; the conductive material; and the binder may mean the negative electrode active material; the negative electrode conductive material; and the negative electrode binder, respectively.

In the present specification, the negative electrode conductive material has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

In addition, the negative electrode conductive material according to the present application has a structure that is completely different from that of a conductive material applied to a graphite-based active material (that is, an electrode active material including only graphite) when the electrode active material includes a silicon-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present invention, the conductive material may further include one or more selected from the group consisting of a dotted conductive material; a planar conductive material; and a linear conductive material.

In an exemplary embodiment of the present invention, the conductive material may further include a planar conductive material.

In an exemplary embodiment of the present application, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 m²/g or more and 70 m²/g or less, preferably 45 m²/g or more and 65 m²/g or less, and more preferably 50 m²/g or more and 60 m²/g or less.

In an exemplary embodiment of the present application, the functional group content (volatile matter) of the dotted conductive material may satisfy 0.01% or more and 1% or less, preferably 0.01% or more and 0.3% or less, and more preferably 0.01% or more and 0.1% or less.

In particular, when the functional group content of the dotted conductive material satisfies the above range, a functional group present on the surface of the dotted conductive material is present, so that when water is used as a solvent, the dotted conductive material may be smoothly dispersed in the solvent. In particular, in the present invention, as silicon particles and a specific binder are used, it is possible to reduce the functional group content of the dotted conductive material, and accordingly, the present invention has an effect excellent in improving dispersibility.

In an exemplary embodiment of the present invention, the dotted conductive material having a functional group content in the above range is characterized by being included along with the silicon-based active material, and the functional group content may be adjusted according to the degree to which the dotted conductive material is heat-treated.

In an exemplary embodiment of the present invention, the dotted conductive material may have a particle diameter of 10 nm to 100 nm, preferably 20 nm to 90 nm, and more preferably 20 nm to 60 nm.

The planar conductive material may serve to improve conductivity and simultaneously suppress the disconnection of the conductive path due to the volume expansion by increasing the surface contact between silicon particles in the negative electrode. The planar conductive material may be expressed as a plate-like conductive material or a bulk conductive material.

In an exemplary embodiment of the present invention, the planar conductive material may include at least one selected from the group consisting of plate-like graphite, graphene, graphene oxide, and graphite flake, and may be preferably plate-like graphite.

In an exemplary embodiment of the present invention, the planar conductive material may have an average particle diameter (D₅₀) of 2 µm to 7 µm, specifically 3 µm to 6 µm, and more specifically 3.5 µm to 5 µm. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present invention, provided is a negative electrode composition in which the planar conductive material has a D₁₀ of 0.5 µm or more and 2.0 µm or less, a D₅₀ of 2.5 µm or more and 3.5 µm or less, and a D₉₀ of 6.5 µm or more and 15.0 µm or less.

In an exemplary embodiment of the present invention, as the planar conductive material, it is possible to use a high specific surface area planar conductive material having a high BET specific surface area; or a low specific surface area planar conductive material.

In an exemplary embodiment of the present invention, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present invention, the planar conductive material may have a BET specific surface area of 1 m²/g or more.

In another exemplary embodiment, the planar conductive material may have a BET specific surface area of 1m²/g or more and 500 m²/g or less, preferably 5m²/g or more and 300m²/g or less, and more preferably 5m²/g or more and 250m²/g or less.

As the planar conductive material according to the present invention, it is possible to use a high specific surface area planar conductive material; or a low specific surface area planar conductive material.

In another exemplary embodiment, the planar conductive material is a high specific surface area planar conductive material, and the BET specific surface area may satisfy a range of 50 m²/g or more and 500 m²/g or less, preferably 80 m²/g or more and 300 m²/g or less, and more preferably 100 m²/g or more and 300 m²/g or less.

In still another exemplary embodiment, the planar conductive material is a low specific surface area planar conductive material, and the BET specific surface area may satisfy a range of 1 m²/g or more and 40 m²/g or less, preferably 5 m²/g or more and 30 m²/g or less, and more preferably 5 m²/g or more and 25 m²/g or less.

In an exemplary embodiment of the present invention, the binder may include the (meth)acrylamide-derived repeating unit in a content of 30 wt% or more and 80 wt% or less with respect to the entire copolymer.

By including (meth)acrylamide in the above content, the electrode composition according to the exemplary embodiments may improve phase stability and improve service life performance in terms of batteries in the future.

In another exemplary embodiment of the present invention, the aqueous binder may include the (meth)acrylamide-derived repeating unit in a content of about 30 wt% or more, about 35 wt% or more, or about 40 wt% or more with respect to the entire copolymer.

In still another exemplary embodiment of the present invention, the upper limit of the binder is not particularly limited as long as the binder includes the (meth)acrylamide (AM) in an amount of about 80 wt% or less with respect to the entire copolymer.

The electrode composition according to the exemplary embodiments may simultaneously solve the volume expansion problem of a negative electrode in the future while maintaining the characteristics in which the dispersibility of single-walled carbon nanotubes is controlled because a (meth)acrylamide-containing binder having high compatibility with the pre-dispersion solution is used, and furthermore, it is possible to contribute to improving the battery service life of lithium ion secondary batteries in the future.

In the present specification, the term "(meth)acrylamide" may include methacrylamide or acrylamide.

Furthermore, the (meth)acrylamide may be referred to as a monomer or a compound in terms of the copolymer included in the binder.

In the present specification, the copolymer means those polymerized with two or more monomers, and may be a concept compared to a homopolymer.

In the present specification, the copolymer may mean at least one of an alternating copolymer, a random copolymer, a block copolymer, a graft copolymer, and a combination thereof.

In the present specification, the binder may include an additional monomer such as (meth)acrylic acid, acrylonitrile, and the like as the remaining component (repeating unit) excluding (meth)acrylamide.

In the present specification, a polymerization initiator is used to prepare the copolymer, and ammonium persulfate may be used as an example of the polymerization initiator, but the polymerization initiator is not limited thereto.

In the present specification, in order to prepare the aqueous binder, a copolymer is prepared, and then may be neutralized with an acid or base at a predetermined concentration, if necessary.

In an exemplary embodiment of the present specification, the aqueous binder may be present in an amount of 2 parts by weight or more and 30 parts by weight or less based on 100 parts by weight of the electrode composition.

In another exemplary embodiment of the present specification, the aqueous binder may be included in an amount of 30 parts by weight or less, preferably 25 parts by weight or less, and more preferably 20 parts by weight or less, or may be included in an amount of 2 parts by weight or more, 3 parts by weight or more, and 4 parts by weight or more, based on 100 parts by weight of the electrode composition.

In still another exemplary embodiment of the present specification, the binder may have a weight average molecular weight of 100,000 g/mol or more and 1,500,000 g/mol or less.

The electrode composition according to the exemplary embodiment may secure characteristics in that mechanical strength is excellent because the weight average molecular weight of the binder satisfies the above range, and the adhesion strength of the electrode is excellent because the interaction between molecules is high. Furthermore, when the above range is satisfied, the viscosity of the binder may be controlled within an appropriate range, so that when a negative electrode is manufactured using the binder, the negative electrode has characteristics in that the coatability of the electrode is excellent.

### <Preparation method of pre-dispersion solution>

An exemplary embodiment of the present invention provides a method for preparing a pre-dispersion solution, the method including incorporating single-walled carbon nanotubes (SWCNTs) and a dispersant and mixing the resulting mixture, and milling the mixture, and the single-walled carbon nanotubes (SWCNTs) may include single-walled carbon nanotubes having a length of more than 0 µm and less than 0.2 µm and single-walled carbon nanotubes having a length of 10 µm or more and less than 100 µm in an amount of more than 0 part by weight and 1 part by weight or less and 15 parts by weight or more, respectively, with respect to 100 parts by weight of the entire single-walled carbon nanotubes.

Those described above may be applied to other exemplary embodiments.

In the present specification, the milling is as described above, but preferably, it is possible to use a high-pressure homogenizer capable of effectively achieving dispersion without causing damage to the single-walled carbon nanotubes.

The specific contents of each component in the method for preparing the pre-dispersion solution are as described above.

By the method for preparing a pre-dispersion solution according to the exemplary embodiments, the dispersibility of single-walled carbon nanotubes as a conductive material is controlled, and the shape of the carbon nanotube structure formed according to the above dispersion may be easily maintained.

### <Preparation method of electrode composition>

An exemplary embodiment of the present invention provides a method for preparing an electrode composition, the method including: mixing the conductive material and the binder; and adding the electrode active material thereto and mixing the resulting mixture, in which the conductive material is the above-described pre-dispersion solution and the binder is a copolymer including a (meth)acrylamide (AM)-derived repeating unit.

In the present specification, based on 100 parts by weight of the binder, the content of the (meth)acrylamide may be about 30 parts by weight or more, about 40 parts by weight or more, or about 45 parts by weight or more, or about 80 parts by weight or less, about 75 parts by weight or less, or about 70 parts by weight or less.

The specific contents of each component in the method for preparing the electrode composition are as described above.

According to the exemplary embodiments, while maintaining the characteristics that the shape of the conductive material with controlled dispersion and the carbon nanotube structure formed thereby is easily maintained, the compatibility with a (meth)acrylamide-based binder is improved thereby, the phase stability is improved in terms of an electrode slurry in the future, and service life characteristics may be improved in terms of batteries.

### <Electrode slurry>

In another exemplary embodiment of the present invention, an electrode slurry including the electrode composition and a solvent is provided.

The electrode slurry of the present invention is a negative electrode slurry, and accordingly, the electrode composition may relate to a negative electrode slurry.

The specific contents of each component in the electrode slurry are as described above.

In the present specification, the solvent can be used without limitation as long as the solvent can dissolve an electrode composition, and for example, water or an organic solvent may be used. Preferably, the solvent may be water.

According to the exemplary embodiments, while maintaining the characteristics that the shape of the conductive material with controlled dispersion and the carbon nanotube structure formed thereby is easily maintained, the compatibility with a (meth)acrylamide-based binder is improved thereby, so that the phase stability of the electrode slurry may be improved, and accordingly, service life characteristics may be improved in terms of batteries in the future.

### <Electrode>

Another exemplary embodiment of the present invention provides an electrode including: a current collector layer; and an electrode active material layer provided on one surface or both surfaces of the current collector layer, in which the electrode active material layer includes the electrode slurry or a dried material thereof.

In another exemplary embodiment of the present invention, the electrode is a negative electrode, and accordingly, the current collector layer, the electrode slurry, and the electrode active material layer may be referred to as a negative electrode current collector layer, a negative electrode slurry, and a negative electrode active material, respectively.

In an exemplary embodiment of the present application, a solid content of the negative electrode slurry may satisfy 3% or more and 50% or less.

In another exemplary embodiment, the solid content of the negative electrode slurry may satisfy a range of 3% or more and 50% or less, preferably 5% or more and 45% or less, and more preferably 7% or more and 40% or less.

The solid content of the electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode composition because the viscosity is suitable during the formation of the negative electrode active material layer.

In an exemplary embodiment of the present application, the slurry solvent can be used without limitation as long as the slurry solvent can dissolve a negative electrode composition, and specifically, water or NMP may be used.

In an exemplary embodiment of the present application, the negative electrode current collector layer generally has a thickness of 1 µm to 100 µm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, copper or stainless steel of which the surface is treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 µm or more and 100 µm or less, and the negative electrode active material layer has a thickness of 20 µm or more and 500 µm or less.

However, the thickness may be variously modified depending on the type and use of the negative electrode used, and is not limited thereto.

### <Lithium ion secondary battery>

In an exemplary embodiment of the present invention, provided is a lithium ion secondary battery including: a first electrode; a second electrode; a separator provided between the first electrode and the second electrode; and an electrolyte, and any one of the first eletrode and the second electrode may be the above-described electrode.

The first electrode may be a negative electrode and the second electrode may be a positive electrode, or the first electrode may be a positive electrode and the second electrode may be a negative electrode.

Since the electrode (negative electrode) has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel of which the surface is treated with carbon, nickel, titanium, silver, and the like. Further, the positive electrode current collector may typically have a thickness of 3 µm to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0. 33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidone (NMP), propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻ , PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

### <Manufacturing method of lithium ion secondary battery>

In another exemplary embodiment of the present invention, provided is a method for manufacturing a lithium ion secondary battery, the method including: preparing an electrode slurry by mixing an electrode composition with a solvent; applying the electrode slurry on one surface or both surfaces of an electrode current collector layer; and drying the electrode current collector layer to which the electrode slurry is applied, and the electrode composition, the solvent, the electrode current collector layer, and the application are the same as described above.

In the present specification, as the drying, a method known in the art, such as air drying, is used.

In the present specification, steps such as rolling applied after the above steps are as known in the art.

### [Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### Preparation Example. Preparation of pre-dispersion solution

After single-walled carbon nanotubes (SWCNTs) (manufactured by OCSiAl, Tubll) and single-walled carbon nanotubes (SWCNTs) (manufactured by Jiangsu Cnano Technology Co., Ltd., FT202) were mixed, the mixed single-walled carbon nanotubes were mixed with polyvinyl pyrrolidone (PVP) (manufactured by Zhangzhou Huafu Chemical Co., Ltd., K15) as a dispersant and tannic acid (manufactured by Sigma-Aldrich) at a ratio of 1:1:0.4 (SWCNTs : PVP : tannic acid) as a weight ratio, and then the resulting mixture was subjected to primary dispersion using a high-shear in-line mixer (primary mixing).

Next, a pre-dispersion solution having a specific dispersion particle size and a solid content of 1 wt% was prepared by repeatedly performing circulation while adjusting pressure using a high-pressure homogenizer (secondary mixing).

The dispersion particle size was measured using a particle size distribution measuring apparatus manufactured by Malvern Panalytical Ltd. The results are shown in the following Table 1.

**[Table 1]**

| Classificati on | Type of pre-dispersion solution | 0 *µ*m < SWCNT Length < 0.2*µ*m | 0.2 *µ*m ≤ SWCNT Length < 10*µ*m | 10 *µ*m ≤ SWCNT Length < 100*µ*m | 100 *µ*m ≤ SWCNT Length |
|---|---|---|---|---|---|
| Preparation Example 1 | Pre-dispersion solution 1 | 0.3% | 71.7% | 28% | 0% |
| Preparation Example 2 | Pre-dispersion solution 2 | 0.2% | 57.5% | 42% | 0.3% |
| Comparative Preparation Example 1 | Pre-dispersion solution A | 7% | 85% | 8% | 0% |
| Comparative Preparation Example 2 | Pre-dispersion solution B | 15% | 67% | 8% | 10% |
| Comparative Preparation Example 3 | Pre-dispersion solution C | 0% | 92% | 8% | 0% |

### Synthesis Examples: Synthesis of binder

In a reactor equipped with a stirrer, a thermometer, a reflux condenser, and a nitrogen gas inflow tube, acrylamide (AM, a 50% aqueous solution), acrylic acid (AA, a 80% aqueous solution), and acrylonitrile (AN) were mixed at a ratio shown in the following Table 2, a polymerization initiator (ammonium persulfate) was added thereto, and then the resulting mixture was reacted at 75°C for 8 hours to prepare an aqueous polymer solution.

Thereafter, a 0.1 molar NaOH aqueous solution was used and dropped into the aqueous polymer solution to neutralize the aqueous solution, and then an aqueous binder was prepared.

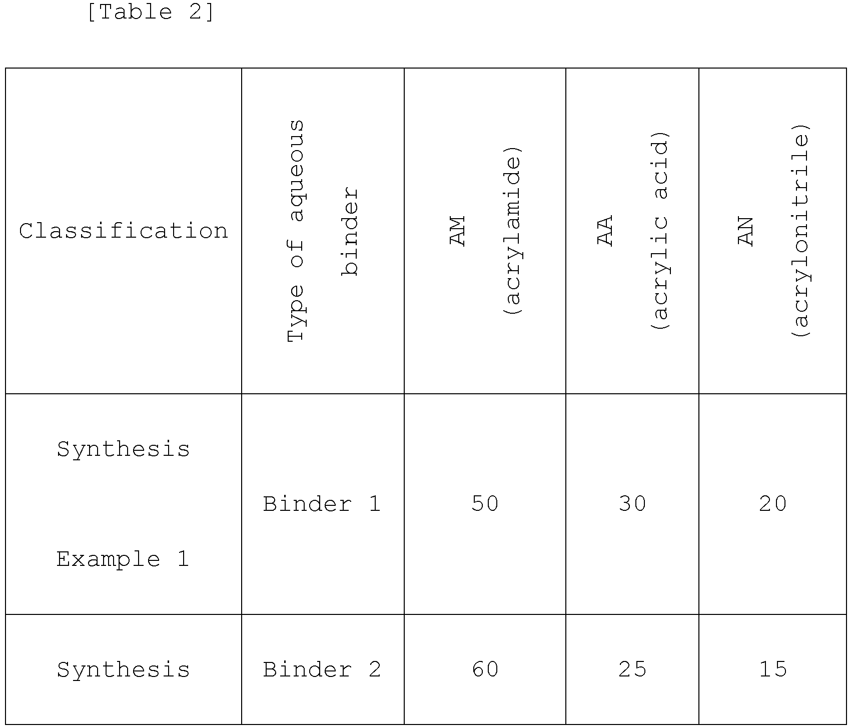

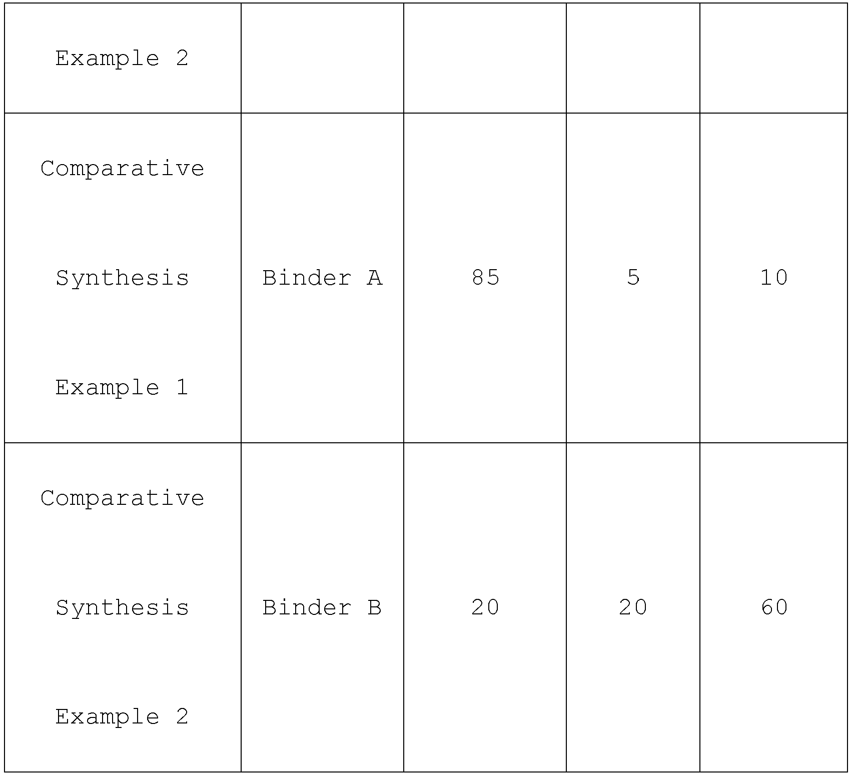

### Examples: Preparation of electrode slurry

As described in the following Table 3, each electrode composition was mixed with a solvent (water) to prepare an electrode slurry. During the preparation of the electrode slurry, the water content was adjusted in consideration of coatability, viscosity, and solid content, and the viscosity was adjusted to 5,000 to 6,000 cps.

**[Table 3]**

| Slurry composition | Negative electrode active material | Conductive Material 1 | Conductive Material 2 (Solid content 1wt%) | Binder |
|---|---|---|---|---|
| Example 1 | Pure Si (100) | SFG6L (15) | Pre-dispersion solution 1 (125) | Binder 1 (10) |
| Example 2 | Pure Si (100) | SFG6L (15) | Pre-dispersion solution 2 (125) | Binder 2 (10) |
| Example 3 | Graphite: Si C (88:12) (100) | SFG6L (15) | Pre-dispersion solution 2 (125) | Binder 2 (10) |
| Example 4 | Graphite: Si Ox (91:9) (100) | SFG6L (15) | Pre-dispersion solution 1 (125) | Binder 2 (10) |
| Comparative Example 1 | Pure Si (100) | SFG6L (15) | Pre-dispersion solution A (125) | Binder 1 (10) |
| Comparative Example 2 | Pure Si (100) | SFG6L (15) | Pre-dispersion solution B (125) | Binder B (10) |
| Comparative Example 3 | Pure Si (100) | SFG6L (15) | Pre-dispersion solution B (125) | Binder A (10) |
| Comparative Example 4 | Graphite: Si C(88:12) (100) | SFG6L (15) | Pre-dispersion solution A (125) | Binder A (10) |
| Comparative Example 5 | Graphite: Si C (91: 9) (100) | SFG6L (15) | Pre-dispersion solution B (125) | Binder 1 (10) |
| Comparative Example 6 | Pure Si (100) | SFG6L (15) | Pre-dispersion solution 1 (125) | Binder B (10) |
| Comparative Example 7 | Pure Si (100) | SFG6L (15) | Pre-dispersion solution C (125) | Binder A (10) |

### Experiment Examples. Battery manufacturing and battery characteristic evaluation

A copper foil with a thickness of 15 µm was coated with each of the electrode slurries shown in Table 3 and dried, an electrode active material layer with a thickness of 48 µm was formed on one surface of the copper foil, and then the copper foil was punched into circular shapes with a diameter of 14 Φ (mm) to manufacture a test electrode (negative electrode).

A metal lithium foil with a thickness of 0.3 mm was used as a positive electrode, a porous polyethylene sheet with a thickness of 0.1 mm was used as a separator, and a product obtained by dissolving LiPF₆ as a lithium salt at a concentration of about 1 mol/L in a mixed solvent of fluoroethylene carbonate (FEC) and diethyl carbonate (DEC) at a volume ratio of 2:1 was used as an electrolytic solution.

A coin cell for evaluation with a thickness of 2 mm and a diameter of 32 mm was manufactured by sealing the negative electrode, the positive electrode, the separator, and the electrolytic solution in a stainless steel container.

The coin cell was charged with a constant current of 0.2 C until the voltage reached 0.01 V, and then discharged with a constant current of 0.2 C until the voltage reached 1.5 V to conduct a capacity retention rate test, and the results are shown in the following Table 4.

**[Table 4]**

| Electrode slurry | Capacity retention rate (%) |
|---|---|
| Example 1 | 85 |
| Example 2 | 82 |
| Example 3 | 83 |
| Example 4 | 80 |
| Comparative Example 1 | 62 |
| Comparative Example 2 | 60 |
| Comparative Example 3 | 51 |
| Comparative Example 4 | 54 |
| Comparative Example 5 | 57 |
| Comparative Example 6 | 68 |
| Comparative Example 7 | 56 |

- Capacity retention rate (%): was calculated based on 30 cycles by charging a coin cell with a constant current of 0.05 C until the voltage reached 0.01 V, discharging the coin cell with a constant current of 0.05 C until the voltage reached 1.5 V, and carrying out the cycle characteristics in the same voltage range as above at a constant current of 0.2 C to conduct a capacity retention rate test.

As described above in Table 4, in Examples 1 to 4, with respect to 100 parts by weight of the entire single-walled carbon nanotubes, the content of single-walled carbon nanotubes having a length of more than 0 µm and less than 0.2 µm was more than 0 part by weight and 1 part by weight or less, and the content of single-walled carbon nanotubes having a length of 10 µm or more and less than 100 µm satisfied 15 parts by weight or more.

Additionally, Examples 2 and 3 correspond to a case of including single-walled carbon nanotubes having a length of 100 µm or more with respect to 100 parts by weight of the entire single-walled carbon nanotubes, the content thereof was more than 0 part by weight and less than 1 part by weight, and the remainder satisfied a content occupied by single-walled carbon nanotubes having a length of 0.2 µm or more and less than 100 µm.

Further, in Examples 1 to 4 above, a binder including a (meth)acrylamide-derived repeating unit in a content of 30 wt% or more and 80 wt% or less with respect to the entire copolymer was used. As a result, all of the capacity retention rates showed 80% or more.

In contrast, Comparative Examples 1 and 5 showed a capacity retention rate of 62% and 57%, respectively, because the dispersion particle size of single-walled carbon nanotubes was out of the range of the present invention even though a binder whose (meth)acrylamide content satisfies the range of the present invention (that is, 30 wt% or more and 80 wt% or less with respect to the entire copolymer) was used.

In addition, Comparative Examples 2 to 4 and 7 showed a capacity retention rate of 60%, 51%, 54%, and 56%, respectively, because a binder whose (meth)acrylamide content is out of 30 wt% or more and 80% or less with respect to the entire copolymer was used as well as the dispersion particle size of single-walled carbon nanotubes was out of the range of the present invention.

Furthermore, Comparative Example 6 showed a capacity retention rate of 68% because the (meth)acrylamide content was out of 30 wt% or more and 80 wt% or less with respect to the entire copolymer even though the dispersion particle size of single-walled carbon nanotubes satisfied the range of the present invention.

Therefore, it can be seen that when Comparative Example 6 is compared with Comparative Examples 1 and 5, the dispersion particle size factor of single-walled carbon nanotubes has a greater influence on improving the capacity retention rate than the (meth)acrylamide content factor, and it can be seen from Comparative Example 2 to 4 and 7 that when the above two factors do not satisfy a specific range, the deterioration in the capacity retention rate becomes serious.

## Claims

1. A pre-dispersion solution comprising single-walled carbon nanotubes (SWCNTs),
wherein, with respect to 100 parts by weight of the entire single-walled carbon nanotubes,
a content of single-walled carbon nanotubes having a length of more than 0 µm and less than 0.2 µm is more than 0 part by weight and 1 part by weight or less, and
a content of single-walled carbon nanotubes having a length of 10 µm or more and less than 100 µm is 15 parts by weight or more.

2. The pre-dispersion solution of claim 1, further comprising single-walled carbon nanotubes having a length of 100 µm or more, wherein a content of the single-walled carbon nanotubes having a length of 100 µm or more is more than 0 part by weight and 1 part by weight or less with respect to 100 parts by weight of the entire single-walled carbon nanotubes.

3. The pre-dispersion solution of claim 1, further comprising single-walled carbon nanotubes having a length of 0.2 µm or more and less than 10 µm, wherein a content of the single-walled carbon nanotubes having a length of 0.2 µm or more and less than 10 µm is 30 parts by weight or more and 80 part by weight or less with respect to 100 parts by weight of the entire single-walled carbon nanotubes.

4. The pre-dispersion solution of claim 1, further comprising a dispersion medium,
wherein the dispersion medium is at least one of water and an organic solvent.

5. The pre-dispersion solution of claim 1, further comprising a dispersant.

6. An electrode composition comprising:
an electrode active material;
a conductive material; and
a binder,
wherein the conductive material comprises the pre-dispersion solution according to claim 1, and
the binder is a copolymer comprising a (meth)acrylamide (AM)-derived repeating unit.

7. The electrode composition of claim 6, wherein the electrode active material comprises one or more selected from the group consisting of a silicon-based active material and a carbon-based active material.

8. The electrode composition of claim 7, wherein the silicon-based active material comprises one or more selected from SiOx, wherein x=0, SiOx, wherein 0<x<2, SiC, and a Si alloy.

9. The electrode composition of claim 7, wherein when the electrode active material is composed of a silicon-based active material, the silicon-based active material comprises one or more selected from the group consisting of SiOx, wherein x=0, and SiOx, wherein 0<x<2, and comprises 70 parts by weight or more of the SiOx, wherein (x=0), based on 100 parts by weight of the silicon-based active material.

10. The electrode composition of claim 7, wherein the carbon-based active material comprises at least one selected from the group consisting of artificial graphite, natural graphite, hard carbon, and soft carbon.

11. The electrode composition of claim 7, wherein when the electrode active material comprises a silicon-based active material and a carbon-based active material, a weight ratio between the silicon-based active material and the carbon-based active material is in a range of 2 : 98 to 30 : 70.

12. The electrode composition of claim 6, wherein the conductive material further comprises a planar conductive material.

13. The electrode composition of claim 6, wherein the binder comprises the (meth)acrylamide-derived repeating unit in a content of 30 wt% or more and 80 wt% or less with respect to the entire copolymer.

14. An electrode slurry comprising the electrode composition according to any one of claims 6 to 13 and a solvent.

15. An electrode comprising:
a current collector layer; and
an electrode active material layer provided on one surface or both surfaces of the current collector layer,
wherein the electrode active material layer comprises the electrode slurry according to claim 14 or a dried material thereof.

16. A lithium ion secondary battery comprising:
a first electrode;
a second electrode;
a separator interposed between the first electrode and the second electrode; and
an electrolyte,
wherein any one of the first electrode and the second electrode is the electrode according to claim 15.
